(19) Europäisches Patentamt / European Patent Office / Office européen des brevets

(11) **EP 4 451 368 A2**

(12) **EUROPEAN PATENT APPLICATION**

(43) Date of publication:
**23.10.2024 Bulletin 2024/43**

(21) Application number: **24165033.2**

(22) Date of filing: **21.03.2024**

(51) International Patent Classification (IPC):
$H01M\ 4/134$ (2010.01)    $H01M\ 4/1395$ (2010.01)
$H01M\ 4/38$ (2006.01)    $H01M\ 4/62$ (2006.01)
$H01M\ 10/056$ (2010.01)    $H01M\ 10/0562$ (2010.01)

(52) Cooperative Patent Classification (CPC):
**H01M 4/134; H01M 4/1395; H01M 4/386;**
**H01M 4/62; H01M 4/625; H01M 10/056;**
H01M 2300/002; H01M 2300/0068

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.04.2023 JP 2023069406**

(71) Applicant: **TOYOTA JIDOSHA KABUSHIKI KAISHA**
**Toyota-shi, Aichi-ken, 471-8571 (JP)**

(72) Inventors:
• **FURUYA, Ryosuke**
  **Toyota-shi, 471-8571 (JP)**
• **YOSHIDA, Jun**
  **Toyota-shi, 471-8571 (JP)**
• **NAKANISHI, Azusa**
  **Toyota-shi, 471-8571 (JP)**

(74) Representative: **D Young & Co LLP**
**3 Noble Street**
**London EC2V 7BQ (GB)**

(54) **NEGATIVE ELECTRODE ACTIVE MATERIAL LAYER, AND SOLID-STATE BATTERY AND PRODUCTION METHOD THEREOF**

(57) The negative electrode active material layer of the present disclosure contains: silicon active material particles; sulfide solid electrolyte particles; and multi-wall carbon nanotubes, and this negative electrode active material layer has, on average, one or more planar cracks having a length of 10 $\mu$m or more in regions of 50 $\mu$m in thickness direction $\times$ 50 $\mu$m in width direction at a cross-section.

FIG. 1

EP 4 451 368 A2



**Description**

FIELD

The present disclosure relates to a negative electrode active material layer, as well as a solid-state battery and a method of producing the same.

BACKGROUND

Solid-state batteries are batteries that include a solid electrolyte layer between a positive electrode active material layer and a negative electrode active material layer, and are advantageous in facilitating simplification of a safety device. Among solid-state batteries, solid-state lithium ion batteries have been attracting attention, since they utilize a battery reaction involving lithium ion migration and can thereby provide a high energy density.

With regard to such solid-state batteries, PTLs 1 and 2 each disclose an all-solid-state battery including a positive electrode layer, a solid electrolyte layer, and a negative electrode layer that are laminated in the order mentioned, in which the negative electrode layer contains a negative electrode active material having a silicon clathrate type-II crystal phase, and a restraining pressure of 0 MPa or higher but lower than 5 MPa is applied to the all-solid-state battery in the lamination direction. The all-solid-state battery of PTL 1 is characterized in that, when a capacity ratio of the negative electrode capacity with respect to the positive electrode capacity is defined as A, the capacity ratio A is 2.5 to 4.8, and the all-solid-state battery of PTL 2 is characterized in that the negative electrode active material has a specific surface area of 8 $m^2/g$ to 17 $m^2/g$.

[CITATION LIST]

[PATENT LITERATURE]

[PTL 1] Japanese Unexamined Patent Publication (Kokai) No. 2022-92723
[PTL 2] Japanese Unexamined Patent Publication (Kokai) No. 2022-92725

SUMMARY

[TECHNICAL PROBLEM]

The present disclosure provides a negative electrode active material layer whose expansion in the thickness direction during charging can be inhibited without sacrificing the battery performance.

[SOLUTION TO PROBLEM]

The present disclosers conducted intensive studies and discovered that the above-described problem can be solved by the following means, thereby completing the present disclosure. More specifically, the present disclosure encompasses the following.

<Aspect 1>

A negative electrode active material layer,

wherein the negative electrode active material layer containings the followings:

silicon active material particles;
sulfide solid electrolyte particles; and
multi-wall carbon nanotubes, and

wherein the negative electrode active material layer has, on average, one or more planar cracks having a length of 10 $\mu$m or more in regions of 50 $\mu$m in thickness direction $\times$ 50 $\mu$m in width direction at a cross-section.

<Aspect 2>

The negative electrode active material layer according to Aspect 1, having a porosity of 7% or less at the time of discharging.

<Aspect 3>

The negative electrode active material layer according to Aspect 1 or 2, wherein

the content ratio of the multi-wall carbon nanotubes is 8% by mass or higher with respect to the mass of the negative electrode active material layer, and
the multi-wall carbon nanotubes have a fiber diameter of 100 nm or more and a fiber length of 5 $\mu$m or more.

<Aspect 4>

The negative electrode active material layer according to any one of Aspects 1 to 3, wherein the silicon active material particles are porous silicon active material particles, clathrate silicon active material particles, or porous clathrate silicon active material particles.

<Aspect 5>

A solid-state battery, including the negative electrode active material layer according to any one of Aspects 1 to 4, a solid electrolyte layer, and a positive electrode active material layer in the order mentioned.

<Aspect 6>

A method of producing a solid-state battery, the method including:

providing a negative electrode active material layer; and
performing densification of the negative electrode active material layer,
wherein
the negative electrode active material layer contains at least silicon active material particles, sulfide solid electrolyte particles, and multi-wall carbon nanotubes, and
the densification of the negative electrode active material layer is performed by roll-pressing with a linear pressure of 2 t/cm or more.

[ADVANTAGEIOUS EFFECTS OF INVENTION]

According to the present disclosure, a negative electrode active material layer whose expansion in the thickness direction during charging can be inhibited without sacrificing the battery performance can be provided.

BRIEF DESCRIPTION OF DRAWING

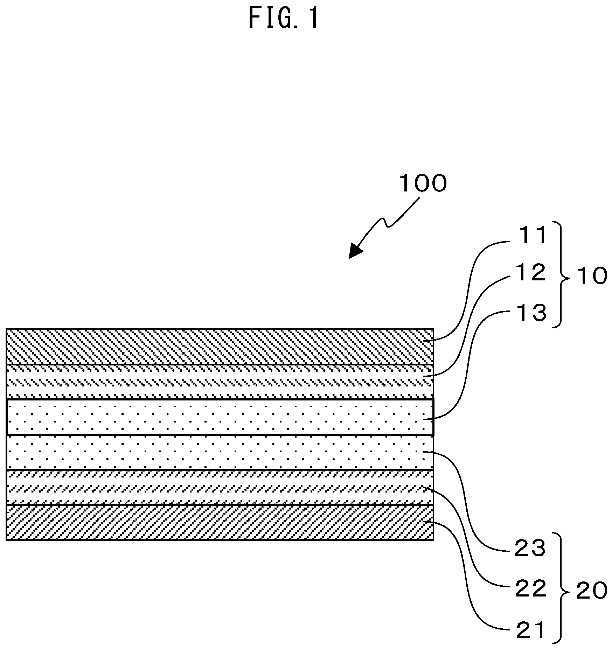

FIG. 1 is a cross-sectional view illustrating one example of the solid-state battery of the present disclosure.

DESCRIPTION OF EMBODIMENTS

<<Negative Electrode Active Material Layer>>

The negative electrode active material layer of the present disclosure contains: silicon active material particles; sulfide solid electrolyte particles; and multi-wall carbon nanotubes, and
this negative electrode active material layer has, on average, one or more planar cracks having a length of 10 $\mu$m or more in regions of 50 $\mu$m in thickness direction $\times$ 50 $\mu$m in width direction at a cross-section.
The above-described cracks may exist both immediately after the production of the negative electrode active material layer and after initial charging and discharging. The term "width direction" used herein refers to a direction perpendicular to the thickness direction at a thickness-wise cross-section of the negative electrode active material layer.
In a solid-state battery using silicon active material particles, there are cases where a negative electrode active material layer expands due to expansion of the silicon active material particles during charging, causing the whole battery to expand. This expansion can be inhibited by increasing the porosity of the negative electrode active material layer through a reduction in the load applied in the stage of densifying the negative electrode active material layer; however, in this case, the battery performance such as electrical resistance may be deteriorated.

In contrast, in the present disclosure, by generating prescribed planar cracks in a negative electrode active material layer, a change in volume caused by expansion of silicon active material particles can be efficiently absorbed while maintaining the battery performance. Particularly, the absorption of a change in volume by such cracks can also be achieved even when the negative electrode active material layer has a low porosity.

In order to generate such cracks, for example, a prescribed amount of relatively thick and long carbon nanotubes, i.e. multi-wall carbon nanotubes, can be added to the negative electrode active material layer, and this negative electrode active material layer can be roll-pressed with an appropriate pressure. Specifically, according to such multi-wall carbon nanotubes and roll-pressing, the above-described cracks can be generated by a moderate spring-back of the negative electrode active material layer after the roll-pressing.

The negative electrode active material layer of the present disclosure may have a porosity of 7% or less, 6% or less, or 5% or less, at the time of discharging. The porosity can be calculated by the following equation:

$$\text{Porosity (\%)} = (1 - x/y) \times 100$$

x: a total volume of materials, which is determined by dividing the weights of the respective materials constituting the negative electrode active material layer by the true densities of the respective materials
y: an apparent volume determined from the actual dimensions of the negative electrode active material layer

The negative electrode active material layer may further contain a conductive auxiliary agent and a binder, and may contain optional other components as well.

The constituents of the present disclosure will now be described.

<Silicon Active Material Particles>

As the silicon active material particles, any silicon active material particles can be used. Therefore, as the silicon active material particles, solid silicon active material particles or porous silicon active material particles can be used. Further, as the silicon active material particles, amorphous silicon active material particles or clathrate silicon active material particles can be used.

The porous silicon active material particles are silicon active material particles that have pores inside primary particles, and these pores enable to inhibit the expansion and contraction of negative electrode active material particles during charging and discharging.

In this respect, for example, in the porous silicon active material particles, the amount of pores having a pore diameter of 100 nm or less may be 0.01 cc/g or more, 0.05 cc/g or more, or 0.10 cc/g or more, and 0.50 cc/g or less, 0.40 cc/g or less, 0.30 cc/g or less, 0.20 cc/g or less, 0.15 cc/g or less, or 0.10 cc/g or less. The amount of pores having a pore diameter of 100 nm or less is a cumulative pore volume of pores having a pore diameter of 100 nm or less. This cumulative pore volume can be determined by, for example, mercury porosimetry.

The porous silicon active material particles can be produced by any method. Specifically, the porous silicon active material particles can be produced by a known method. For example, the porous silicon active material particles can be produced by forming alloy particles of silicon and other metal such as magnesium or lithium, and subsequently removing the other metal from the alloy particles by elution.

The porous silicon active material particles may be porous clathrate silicon active material particles having a clathrate structure. The porous silicon active material particles preferably have a clathrate structure, since this further reduces the expansion and contraction of the porous silicon active material particles caused by charging and discharging of a battery. Whether or not the porous silicon active material particles have a clathrate structure can be easily judged based on a Raman spectrum, an XRD, or the like. The porous silicon active material particles may have a oxide coating film, and may contain impurities such as carbon.

The porous clathrate silicon active material particles can be obtained by any known method in which, for example, the above-described porous silicon active material particles and a sodium source, such as NaH, are mixed, and the resultant is subsequently heat-treated in a non-oxidizing atmosphere to remove sodium.

The size of the silicon active material particles is not particularly limited. The median diameter (D50 particle size) of porous silicon active material particles may be, for example, 0.1 μm or more, 0.3 μm or more, or 0.5 μm or more, and 50.0 μm or less, 30.0 μm or less, 10.0 μm or less, 5.0 μm or less, 3.0 μm or less, or 1.0 μm or less. It is noted here that the median diameter of the porous silicon active material particles is a particle size (D50 diameter) at a cumulative value of 50% in a volume-based particle size distribution determined by a laser diffraction-scattering method.

<Sulfide Solid Electrolyte Particles>

As the sulfide solid electrolyte particles, any sulfide solid electrolyte particles can be used. Specific examples of the sulfide solid electrolyte particles include particles of $Li_2S-P_2S_5$, $Li_2S-SiS_2$, $LiI-Li_2S-SiS_2$, $LiI-Si_2S-P_2S_5$, $Li_2S-P_2S_5-LiI-LiBr$, $LiI-Li_2S-P_2S_5$, $LiI-Li_2S-P_2O_5$, $LiI-Li_3PO_4-P_2S_5$, $Li_2S-P_2S_5-GeS_2$, and the like. Particularly, among these sulfide solid electrolyte particles, ones containing at least Li, S, and P as constituent elements have high performance and are thus preferred. The sulfide solid electrolyte particles may be amorphous or crystalline. Such sulfide solid electrolyte particles may be used singly, or in combination of two or more kinds thereof.

<Multi-Wall Carbon Nanotubes>

As the multi-wall carbon nanotubes, any multi-wall carbon nanotubes can be used. It is noted here that, while single-wall carbon nanotubes are each constituted by a single graphene sheet, multi-wall carbon nanotubes are each constituted by plural graphene sheets. The graphene sheets constituting the multi-wall carbon nanotubes may be of a chiral (helical) type, a zigzag type, or an armchair type. The multi-wall carbon nanotubes in the present disclosure may be constituted by a single kind of graphene sheets, or plural kinds of graphene sheets.

The content ratio of the multi-wall carbon nanotubes may be 5% by mass or higher, 6% by mass or higher, 7% by mass or higher, or 8% by mass or higher, and 15% by mass or lower, 14% by mass or lower, 13% by mass or lower, or 12% by mass or lower, with respect to the mass of the negative electrode active material layer. The mass of the negative electrode active material layer means a solid content.

The diameter (fiber diameter) of the multi-wall carbon nanotubes is not particularly limited, and the average diameter may be, for example, 100 nm or more, 130 nm or more, or 150 nm or more, but 1,000 nm or less, 500 nm or less, 300 nm or less, or 200 nm or less. The length of the multi-wall carbon nanotubes is not particularly limited, and the average length may be, for example, 1000 nm or more, 2,000 nm or more, 3,000 nm or more, 4,000 nm or more, or 5,000 nm or more, and 20,000 nm or less, 15,000 nm or less, 12,000 nm or less, 10,000 nm or less, 9,000 nm or less, 8,000 nm or less, or 7,000 nm or less. Multi-wall carbon nanotubes having an average diameter and an average length in these ranges are preferred from the standpoint of inducing a moderate spring-back of the negative electrode active material layer after roll-pressing and thereby generating cracks.

The aspect ratio (a ratio of the average length with respect to the average diameter) of the multi-wall carbon nanotubes is not particularly limited and may be, for example, 10 or higher, 20 or higher, or 30 or higher, but 1,000 or lower, 800 or lower, 500 or lower, 400 or lower, 300 or lower, 200 or lower, 100 or lower, 90 or lower, 70 or lower, or 50 or lower.

The average diameter and the average length of the multi-wall carbon nanotubes can be determined by measuring the dimensions of randomly selected 50 or more multi-wall carbon nanotubes under a scanning electron microscope (SEM), a transmission electron microscope (TEM) or the like, and taking an arithmetic mean of the thus measured values.

When single-wall carbon nanotubes are used in combination with the multi-wall carbon nanotubes, the mass ratio of the multi-wall carbon nanotubes in all carbon nanotubes may be, for example, 1% by mass or higher, 3% by mass or higher, 5% by mass or higher, 10% by mass or higher, 20% by mass or higher, 30% by mass or higher, 40% by mass or higher, 50% by mass or higher, 60% by mass or higher, 70% by mass or higher, 80% by mass or higher, 90% by mass or higher, 95% by mass or higher, or 99% by mass or higher. Preferably, as carbon nanotubes, the multi-wall carbon nanotubes can be used alone.

<Conductive Auxiliary Agent>

The conductive auxiliary agent is not particularly limited and, for example, a carbon material, examples of which include vapor-grown carbon fibers (VGCFs), carbon nanotubes, and carbon blacks such as acetylene black and Ketjen black, or a metal material can be used.

<Binder>

The binder is not particularly limited and, for example, a material such as a polyvinylidene fluoride (PVDF), a butadiene rubber (BR), a polytetrafluoroethylene (PTFE), a styrene-butadiene rubber (SBR), or a derivative thereof, or a combination of these materials can be used. As a derivative of any of these materials, for example, a polyvinylidene fluoride-hexafluoropropylene copolymer can be used.

<Other Components>

As other component, for example, a conductive agent other than carbon nanotubes can be used. This conductive agent is not particularly limited.

<<Solid-State Battery>>

The solid-state battery of the present disclosure includes the above-described negative electrode active material layer, a solid electrolyte layer, and a positive electrode active material layer in the order mentioned.
The solid-state battery of the present disclosure may include a negative electrode current collector layer on the side of the negative electrode active material layer opposite from the solid electrolyte layer, and may also include a positive electrode current collector layer on the side of the positive electrode active material layer opposite from the solid electrolyte layer. In other words, the solid-state battery of the present disclosure may include the negative electrode current collector layer, the negative electrode active material layer, the solid electrolyte layer, the positive electrode active material layer, and the positive electrode current collector layer in the order mentioned.
Further, the solid-state battery of the present disclosure may be restrained by restraining members, such as end plates, from both sides of the lamination direction of the above-described layers.

<Solid Electrolyte Layer>

The solid electrolyte layer may contain a solid electrolyte.
A material of the solid electrolyte is not particularly limited, and any material that can be utilized as a solid electrolyte in a lithium ion battery may be used. For example, the solid electrolyte may be, but not limited to, any of a sulfide solid electrolyte, an oxide solid electrolyte, and a polymer electrolyte. These solid electrolytes may be used singly, or in combination of two or more kinds thereof.
As the sulfide solid electrolyte, for example, the sulfide solid electrolyte particles exemplified above in relation to the negative electrode active material layer can be used.
Examples of the oxide solid electrolyte include, but not limited to, $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, and $Li_{3+x}PO_{4-x}N_x$ (LiPON). These oxide solid electrolytes may be amorphous or crystalline.
Examples of the polymer electrolyte include, but not limited to, polyethylene oxide (PEO), polypropylene oxide (PPO), and copolymers thereof.

<Positive Electrode Active Material Layer>

The positive electrode active material layer used in the solid-state battery of the present disclosure contains a positive electrode active material and, as desired, may further contain an electrolyte, a conductive auxiliary agent, a binder, and the like. In addition, the positive electrode active material layer may contain other various additives. In the positive electrode active material layer, the content of each of the positive electrode active material, the electrolyte, the conductive auxiliary agent, the binder, and the like may be determined as appropriate in accordance with the target battery performance.
As the positive electrode active material, any known positive electrode active material, particularly one used in lithium ion batteries can be used, and the positive electrode active material can be selected from, for example: metal oxides containing lithium and at least one transition metal selected from manganese, cobalt, nickel, and titanium; heteroelement-substituted Li-Mn spinels such as lithium cobaltate, lithium nickelate, lithium manganate, or nickel cobalt lithium manganate (NCM); lithium titanate; lithium metal phosphate; and combinations thereof.
The electrolyte optionally contained in the positive electrode active material layer may be a solid electrolyte, a liquid electrolyte (an electrolyte solution), or a combination thereof.

<Negative Electrode Current Collector Layer>

A negative electrode layer used in the solid-state battery of the present disclosure may be provided with a negative electrode current collector layer that is in contact with the negative electrode active material layer. As the negative electrode current collector layer, any current collector layer that is generally used as a negative electrode current collector layer of a battery can be employed. The negative electrode current collector layer may be in the form of, for example, a foil, a plate, a mesh, a punched metal, a porous body, or a foam. The negative electrode current collector layer may be a metal foil, a metal mesh, or a carbon sheet. Particularly, a metal foil is excellent in terms of the ease of handling and the like. The negative electrode current collector layer may be composed of plural foils or sheets. Examples of a metal constituting the negative electrode current collector layer include Cu, Ni, Cr, Au, Pt, Ag, Al, Fe, Ti, Zn, Co, and stainless steel. Particularly, from the standpoint of ensuring a reduction resistance and the standpoint of making alloy formation with lithium difficult, the negative electrode current collector layer may contain at least one metal selected from Cu, Ni, and stainless steel.

<Positive Electrode Current Collector Layer>

As the positive electrode current collector layer used in the solid-state battery of the present disclosure, any current collector layer that is generally used as a positive electrode current collector layer of a secondary battery can be employed. The positive electrode current collector layer may be in the form of, for example, a foil, a plate, a mesh, a punched metal, a porous body, or a foam. The positive electrode current collector layer may be a metal foil or a metal mesh. Particularly, a metal foil is excellent in terms of the ease of handling and the like. The positive electrode current collector layer may be composed of plural metal foils. Examples of a metal constituting the positive electrode current collector layer include Cu, Ni, Cr, Au, Pt, Ag, Al, Fe, Ti, Zn, Co, and stainless steel.

<<Method of Producing Solid-State Battery>>

A method of producing a solid-state battery according to the present disclosure includes:

providing a negative electrode active material layer; and
performing densification of the negative electrode active material layer, and
the negative electrode active material layer contains at least silicon active material particles, sulfide solid electrolyte particles, and multi-wall carbon nanotubes, and
the densification of the negative electrode active material layer is performed by roll-pressing with a linear pressure of 2 t/cm or more.

Particularly, the method of the present disclosure may include: providing a negative electrode active material layer; providing a solid electrolyte layer; and providing a positive electrode active material layer.
The steps of the method of the present disclosure and the materials used therein will now each be described.

<Provision of Negative Electrode Active Material Layer>

A negative electrode active material layer can be provided by any known method, for example, by applying a slurry for forming negative electrode active material layer to a negative electrode current collector layer.
The slurry for forming negative electrode active material layer slurry for forming can be obtained by mixing the components constituting the negative electrode active material layer in a dispersion medium. With regard to these components, reference can be made to the description relating to the negative electrode active material layer.
As a dispersion medium, for example, water and various organic solvents can be used. As an organic solvent, a nonpolar organic solvent, a polar organic solvent, or a combination thereof can be used.
As the nonpolar organic solvent, for example, an aliphatic hydrocarbon such as hexane or heptane, or an aromatic hydrocarbon such as xylene or toluene can be used. As the polar organic solvent, for example, a ketone-based solvent such as diisobutyl ketone, a tertiary amine-based solvent such as triethylamine, an ether-based solvent such as cyclopentyl methyl ether, a thiol-based solvent such as ethane mercaptan, or an ester-based solvent such as butyl butyrate can be used.
The slurry for forming negative electrode active material layer can be applied by any known method, examples of which include a doctor blade method, metal mask printing method, an electrostatic coating method, a dip coating method, a spray coating method, a roll coating method, a gravure coating method, and a screen printing method. These methods may be employed singly or in combination.

<Densification of Negative Electrode Active Material Layer>

The densification of the negative electrode active material layer is performed by roll-pressing with a linear pressure of 2 t/cm or more.
The densification of the negative electrode active material layer may be performed by itself, or may be simultaneously performed with densification of other layer and, for example, the negative electrode active material layer and a solid electrolyte layer may be densified integrally.
The densification is performed at a linear pressure of 2.0 t/cm or more, 2.5 t/cm or more, 3.0 t/cm or more, 3.5 t/cm or more, 4.0 t/cm or more, or 4.5 t/cm or more. This linear pressure may be 10.0 t/cm or less, 9.0 t/cm or less, 8.0 t/cm or less, 7.0 t/cm or less, 6.0 t/cm or less, or 5.5 t/cm or less. The densification of the negative electrode active material layer containing multi-wall carbon nanotubes at the above-described linear pressure allows the negative electrode active material layer to moderately spring-back after the densification, as a result of which the above-described cracks can be generated.

<Provision of Solid Electrolyte Layer>

A solid electrolyte layer can be provided by any known method, for example, by applying a slurry for forming solid electrolyte layer to a material to be coated for transfer, for example, a metal foil such as a stainless steel foil.
The thus provided solid electrolyte layer may be laminated and integrated with the negative electrode active material layer and/or a positive electrode active material layer.

<Provision of Positive Electrode Active Material Layer>

A positive electrode active material layer can be provided by any known method, for example, by applying a slurry for forming positive electrode active material layer to a positive electrode current collector layer.
The slurry for forming positive electrode active material layer can be obtained by mixing a positive electrode active material and a solid electrolyte along with optional binder, conductive auxiliary agent, and the like in a dispersion medium. As the positive electrode active material and the solid electrolyte, those exemplified above in relation to the positive electrode active material layer can be used. As the silicon active material particles, the sulfide solid electrolyte particles, and the multi-wall carbon nanotubes, those exemplified above in relation to the negative electrode active material layer can be used.
With regard to a method of applying the slurry for forming positive electrode active material layer and the dispersion medium, reference can be made to the description of the slurry for forming negative electrode active material layer.

EXAMPLES

The present disclosure will now be described concretely by way of Examples and Comparative Examples; however, the present disclosure is not limited thereto.
A solid-state battery of Example 1 was produced in the following manner.

(Production of Negative Electrode Active Material Layer)

To diisobutyl ketone (2.7 g) serving as a dispersion medium, multi-wall carbon nanotubes (MWCNTs) (0.33 g), a silicon active material (1.0 g), a sulfide solid electrolyte (1.2 g), and a 5%-by-mass diisobutyl ketone solution of a polyvinylidene fluoride-hexafluoropropylene copolymer (PVDF-HFP) (0.8 g (PVDF-HFP: 0.04 g, diisobutyl ketone: 0.76 g)) were added, and the resultant was dispersion-treated with an ultrasonic wave having an amplitude of 40 $\mu$m and a frequency of 20 kHz over a period of 10 minutes to obtain a slurry for forming negative electrode active material layer. The multi-wall carbon nanotubes (MWCNTs) used here had an average fiber diameter of about 150 nm and an average fiber length of about 6,000 nm.
The slurry for forming negative electrode active material layer obtained in the above-described manner was applied to a surface-roughened nickel foil serving as a negative electrode current collector layer using blades having a gap of 100 $\mu$m, whereby a negative electrode active material layer was obtained.
The ratio of multi-wall carbon nanotubes with respect to a total solid content was about 13% by mass (0.33 g/(2.7 g + 0.33 g + 1.0 g + 0.8 g $\times$ 0.05)). As the sulfide solid electrolyte, $Li_2S$-$P_2S_5$ glass ceramic was used.
The silicon active material was a porous clathrate silicon (PC-Si) produced in the following manner. Specifically, as a Si source, Si powder (Si powder having no void inside a primary particle) was prepared. This Si source and Li metal were weighed at a molar ratio of Li/Si = 4.0, and mixed using a mortar in an Ar atmosphere to obtain an alloy compound. The thus obtained alloy compound was allowed to react with ethanol in an Ar atmosphere to obtain a silicon having voids inside a primary particle, i.e. a porous silicon having a porous structure.
Subsequently, a NaSi alloy was produced using a powder of the thus obtained porous silicon and NaH serving as a Na source. As this NaH, NaH washed with hexane in advance was used. The Na source and the Si source were weighed at a molar ratio of 1.05:1.00 and mixed using a cutter mill. The resulting mixture was heated in a heating furnace in an Ar atmosphere at 400°C for 40 hours to obtain a powder-form NaSi alloy.
The thus obtained NaSi alloy was heated in an Ar atmosphere at a heating temperature of 270°C for a heating time of 120 hours to remove Na, whereby a porous clathrate silicon having a clathrate type-II crystal phase was obtained.

(Production of Solid Electrolyte Layer)

To heptane (0.8 g) serving as a dispersion medium, the above-described sulfide solid electrolyte (0.4 g) and a 5%-by-mass heptane solution (0.05 g) of an acrylonitrile-butadiene rubber (ABR) were added, and the resultant was dispersion-treated with an ultrasonic wave having an amplitude of 40 $\mu$m and a frequency of 20 kHz over a period of 10 minutes to obtain a slurry for forming solid electrolyte layer. The thus obtained slurry for forming solid electrolyte layer was applied to a stainless steel foil for transfer using blades having a gap of 50 $\mu$m, whereby a solid electrolyte layer was obtained.

(Production of Positive Electrode Active Material Layer)

To butyl butyrate (1 g) serving as a dispersion medium, NCM (2 g), VGCF-H (0.03 g), the sulfide solid electrolyte (0.3 g), a 5%-by-mass butyl butyrate solution (0.3 g) of a polyvinylidene fluoride-hexafluoropropylene (PVDF-HFP) copolymer were added, and the resultant was dispersion-treated with an ultrasonic wave having an amplitude of 40 $\mu$m and a frequency of 20 kHz over a period of 10 minutes to obtain a slurry for forming positive electrode active material layer. The thus obtained slurry for forming positive electrode active material layer was applied to an aluminum foil serving as a positive electrode current collector layer using blades having a gap of 100 $\mu$m, whereby a positive electrode active material layer was obtained.

(Production of Solid-State Battery)

The solid electrolyte layer was disposed on the negative electrode active material layer, and the resultant was roll-pressed with a linear pressure of 5 t/cm at room temperature to obtain a negative electrode laminate 20 having a negative electrode current collector layer 21, a negative electrode active material layer 22, and a solid electrolyte layer 23 in the order mentioned. Further, the solid electrolyte layer was disposed on the positive electrode active material layer, and the resultant was roll-pressed with a linear pressure of 4 t/cm at 170°C to obtain a positive electrode laminate 10 having a positive electrode current collector layer 11, a positive electrode active material layer 12, and a solid electrolyte layer 13 in the order mentioned. The thus obtained laminates were each punched out into a circular piece of 1 cm$^2$, and the solid electrolyte layer 23 of the negative electrode laminate 20 and the solid electrolyte layer 13 of the positive electrode laminate 10 were superimposed and bonded together to obtain a solid-state battery 100 having a laminate of the negative electrode current collector layer 21, the negative electrode active material layer 22, the solid electrolyte layer 23, the solid electrolyte layer 13, the positive electrode active material layer 12, and the positive electrode current collector layer 11. In other words, the thus obtained battery laminate had such a laminated configuration as illustrated in FIG. 1.

<Evaluation>

The solid-state battery of Example 1 obtained in the above-described manner was evaluated as follows. The evaluation results are shown in Table 2.

(Number of Cracks and Porosity)

The number of cracks in the negative electrode active material layer of the above-obtained battery laminate was evaluated. Specifically, the thus produced solid-state battery was cut in the lamination direction, and the resulting cut cross-section was observed under an FE-SEM at a magnification of ×2,000 to count the number of cracks in a range of 40 $\mu$m in the lamination direction (thickness direction) × 60 $\mu$m in the width direction of the solid state battery. Three fields of view were observed for each sample, and an average of the three fields of view was taken as the number of cracks. It is noted here that a laterally elongated void having a width of 2 $\mu$m or more in the lamination direction of the solid-state battery and an aspect ratio of 5 or higher was judged as a crack. A continuous crack was counted as a single crack regardless of its length. Further, the porosity of the negative electrode active material layer was calculated using a total volume of materials, which is determined from the weights and the true densities of the respective materials constituting the negative electrode active material layer, and an apparent volume determined from the actual dimensions of the negative electrode active material layer.

(Restraining Pressure, Cell Capacity, and Internal Resistance)

A solid-state battery produced separately from the one used for the evaluation of the number of cracks and the porosity was restrained using a restraining jig at a restraining pressure of 5 MPa, constant-current constant-voltage charged (CCCV-charged) to 4.35 V at 1/10 C, and then CCCV-discharged to 3.35 V at 1/3 C. Subsequently, the solid-state battery was again CCCV-charged to 4.35 V at 1/10 C, and the restraining pressure was measured at this point. Using the thus measured value as post-charging restraining pressure, the amount of increase in the restraining pressure was calculated. Then, the solid-state battery was CCCV-discharged to 3.35 V at 1/3 C, and the cell capacity was measured. Thereafter, the solid-state battery was again CCCV-charged to 4.35 V at 1/10 C and then discharged at 7 C, and the internal resistance was calculated from the voltage change in 10 seconds and the current value.

<<Examples 2 to 4 and Comparative Examples 1 to 4»

Solid-state batteries of Examples 2 to 4 and Comparative Examples 1 to 4 were obtained and evaluated in the same manner as in Example 1, except that the conductive auxiliary agent to be used was changed as shown in Tables 1 and 2 below, and that the densification load of the negative electrode active material layer was changed as shown in Table 2.

In Table 1, "MWCNTs" denote multi-wall carbon nanotubes having an average fiber diameter of about 150 nm and an average fiber length of about 6,000 nm, and "SWCNTs" denote single-wall carbon nanotubes having an average fiber diameter of about 2 nm and an average fiber length of about 5,000 nm. Further, in Table 1, "AB" denotes an acetylene black having an average particle size of 35 nm.

The summary and evaluation results of Examples and Comparative Examples are shown in Tables 1 and 2 below.

[Table 1]

Table 1

| | Negative electrode active material | | Dispersion medium | | Conductive auxiliary agent | | | | Solid electrolyte | | Binder composition | | | | Ratio of conductive auxiliary agent with respect to dispersion medium (% by mass) | Ratio of conductive auxiliary agent with respect to total solid content (% by mass) |
| | | | | | | | | | | | Solid content | | Solvent | | | |
| | Type | Amount (g) | Type | Amount (g) | Type | Fiber diameter (nm) | Fiber length (nm) | Amount (g) | Type | Amount (g) | Type | Amount (g) | Type | Amount (g) | | |
| Example 1 | PC-Si | 1.0 | DIBK | 2.7 | MWCNTs | 150 | 6,000 | 0.330 | sulfide | 1.2 | PVDF-HFP | 0.04 | DIBK | 0.76 | 9.538 | 12.840 |
| Example 2 | PC-Si | 1.0 | DIBK | 2.7 | MWCNTs | 150 | 6,000 | 0.330 | sulfide | 1.2 | PVDF-HFP | 0.04 | DIBK | 0.76 | 9.538 | 12.840 |
| Example 3 | PC-Si | 1.0 | DIBK | 2.7 | MWCNTs | 150 | 6,000 | 0.200 | sulfide | 1.2 | PVDF-HFP | 0.04 | DIBK | 0.76 | 5.78 | 8.197 |
| Example 4 | PC-Si | 1.0 | DIBK | 2.7 | MWCNTs | 150 | 6,000 | 0.120 | sulfide | 1.2 | PVDF-HFP | 0.04 | DIBK | 0.76 | 3.468 | 5.085 |
| Comparative Example 1 | PC-Si | 1.0 | DIBK | 2.7 | MWCNTs | 150 | 6,000 | 0.330 | sulfide | 1.2 | PVDF-HFP | 0.04 | DIBK | 0.76 | 9.538 | 12.840 |
| Comparative Example 2 | PC-Si | 1.0 | DIBK | 2.7 | - | 150 | 6,000 | 0.000 | sulfide | 1.2 | PVDF-HFP | 0.04 | DIBK | 0.76 | 0.000 | 0.000 |
| Comparative Example 3 | PC-Si | 1.0 | DIBK | 2.7 | SWCNTs | 2 | 5,000 | 0.004 | sulfide | 1.2 | PVDF-HFP | 0.04 | DISK | 0.76 | 0.116 | 0.178 |
| Comparative Example 4 | PC-Si | 1.0 | DISK | 2.7 | AB | 35 (particle | size) | 0.057 | sulfide | 1.2 | PVDF-HFP | 0.04 | DISK | 0.76 | 1.647 | 2.481 |

[Table 2]

Table 2

| | Production Conditions | | | | | Evaluation Results | | | | | | |
|---|---|---|---|---|---|---|---|---|---|---|---|---|
| | Conductive auxiliary agent | | | Densification load of negative electrode active material layer (t/cm) | Lateral cracks | Porosity (%) | Cell capacity (mAh) | Restraining pressure (MPa) | | | Restraining pressure/Capacity (MPa/mAh) | Resistance ($\Omega \cdot cm^2$) |
| | Type | Ratio with respect to dispersion medium (% by mass) | Ratio with respect to total solid content (% by mass) | | | | | Initial | After charging | Increase | | |
| Example 1 | MWCNTs | 9.538 | 12.84 | 5.0 | present | 4.51 | 2.49 | 5.000 | 5.186 | 0.186 | 0.075 | 43 |
| Example 2 | MWCNTs | 9.538 | 12.84 | 3.0 | present | 5.23 | 2.46 | 5.000 | 5.157 | 0.157 | 0.064 | 44 |
| Example 3 | MWCNTs | 5.78 | 8.197 | 5.0 | present | 4.45 | 2.35 | 5.000 | 5.177 | 0.177 | 0.075 | 47 |
| Example 4 | MWCNTs | 3.468 | 5.085 | 5.0 | present | 4.15 | 2.45 | 5.000 | 5.189 | 0.189 | 0.092 | 51 |
| Comparative Example 1 | MWCNTs | 9.538 | 12.84 | 1.5 | absent | 10.23 | 2.53 | 5.000 | 5.184 | 0.184 | 0.101 | 65 |
| Comparative Example 2 | - | 0.000 | 0.000 | 5.0 | absent | 1.05 | 2.51 | 5.000 | 5.253 | 0.253 | 0.105 | 76 |
| Comparative Example 3 | SWCNTs | 0.116 | 0.178 | 5.0 | absent | 1.17 | 2.35 | 5.000 | 5.246 | 0.246 | 0.105 | 41 |
| Comparative Example 4 | AB | 1.647 | 2.481 | 5.0 | absent | 1.22 | 2.44 | 5.000 | 5.255 | 0.255 | 0.105 | 49 |

From Table 1, it can be understood that, in the secondary batteries of Examples which included the negative electrode active material layer of the present disclosure that had, on average, one or more planar cracks having a length of 10 $\mu$m or more in regions of 50 $\mu$m in thickness direction $\times$ 50 $\mu$m in width direction at a cross-section, not only expansion was inhibited but also a low resistance was achieved

Further, with regard to the number of cracks, in this evaluation, cracks were counted within a range of 40 $\mu$m in thickness direction $\times$ 60 $\mu$m in width direction. This range is smaller than a region of 50 $\mu$m in thickness direction $\times$ 50 $\mu$m in width direction; therefore, the number of cracks in the negative electrode active material layers of the solid-state batteries of Examples was naturally one or more on average even when converted into a region of 50 $\mu$m in thickness direction $\times$ 50 $\mu$m in width direction.

REFERENCE SIGNS LIST

10: positive electrode laminate
11: positive electrode current collector layer
12: positive electrode active material layer
13, 23: solid electrolyte layer
20: negative electrode laminate
21: negative electrode current collector layer
22: negative electrode active material layer
100: solid-state battery

**Claims**

1. A negative electrode active material layer,

   wherein the negative electrode active material layer containings the followings:

   silicon active material particles;
   sulfide solid electrolyte particles; and
   multi-wall carbon nanotubes, and

   wherein the negative electrode active material layer has, on average, one or more planar cracks having a length of 10 $\mu$m or more in regions of 50 $\mu$m in thickness direction $\times$ 50 $\mu$m in width direction at a cross-section.

2. The negative electrode active material layer according to Claim 1, having a porosity of 7% or less at the time of discharging.

3. The negative electrode active material layer according to Claim 1 or 2, wherein

   the content ratio of the multi-wall carbon nanotubes is 8% by mass or higher with respect to the mass of the negative electrode active material layer, and
   the multi-wall carbon nanotubes have a fiber diameter of 100 nm or more and a fiber length of 5 $\mu$m or more.

4. The negative electrode active material layer according to any one of Claims 1 to 3, wherein the silicon active material particles are porous silicon active material particles, clathrate silicon active material particles, or porous clathrate silicon active material particles.

5. A solid-state battery, including the negative electrode active material layer according to any one of Claims 1 to 4, a solid electrolyte layer, and a positive electrode active material layer in the order mentioned.

6. A method of producing a solid-state battery, the method including:

   providing a negative electrode active material layer; and
   performing densification of the negative electrode active material layer,
   wherein

the negative electrode active material layer contains at least silicon active material particles, sulfide solid electrolyte particles, and multi-wall carbon nanotubes, and

the densification of the negative electrode active material layer is performed by roll-pressing with a linear pressure of 2 t/cm or more.

FIG. 1

**EP 4 451 368 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022092723 A

- JP 2022092725 A